# EUROPÄISCHE PATENTSCHRIFT

(11) **EP 0 920 651 B1**
(45) Veröffentlichungstag und Bekanntmachung des Hinweises auf die Patenterteilung: **06.02.2002**
(21) Anmeldenummer: 97936581.4
(22) Anmeldetag: 01.08.1997
(51) Int. Cl.: G02B 21/26, G02B 7/00, G02B 21/24

(54) **FEINFOKUSSIERTISCH**
FINE FOCUSSING TABLE
PLATINE POUR MISE AU POINT FINE

(30) Priorität: 23.08.1996 DE 19634000; 05.12.1996 DE 19650392
(43) Veröffentlichungstag der Anmeldung: 09.06.1999
(73) Patentinhaber: LEICA LASERTECHNIK GmbH, 69120 Heidelberg (DE)
(72) Erfinder: ENGELHARDT, Johann, D-76669 Bad Schönborn (DE); KIERSCHKE, Klaus, D-69198 Schriesheim (DE)
(74) Vertreter: Stamer, Harald
(86) Internationale Anmeldenummer: DE9701630
(87) Internationale Veröffentlichungsnummer: WO9808126

(56) Entgegenhaltungen:
- EP-A- 0 277 675
- WO-A-95/19552
- DE-A- 3 246 358
- DE-A- 4 232 077
- FR-A- 1 552 265
- US-A- 3 407 018
- US-A- 4 095 874

## Beschreibung

Die Erfindung betrifft einen Feinfokussiertisch für Mikroskope, mit einer Objektplatte, einer Halterung für die Objektplatte und einer die Objektplatte in ihrer horizontalen Lage verändernden Verstelleinrichtung.

In der regulären Mikroskopie wird die Fokuslage des Objekts über den Fokustrieb des Mikroskops eingestellt. Die mit den dort eingebauten Motoren - in der Regel DC-Motoren - erreichbaren Positioniergenauigkeiten liegen bei plus/minus 50 nm. Solche Werte sind jedoch um mehr als den Faktor zwei zu schlecht, so daß eine derartige Fokussierung nicht zu gebrauchen ist. Häufig werden auch externe Schrittmotoren an den Feinfokustrieb des Mikroskops angeflanscht. Durch entsprechende Untersetzungen lassen sich dann zwar feine Schritteinteilungen erreichen, jedoch ist die freie Positionierbarkeit dabei erforderlicher externer oder interner Getriebe ganz erheblich eingeschränkt.

Aus der Praxis sind auch bereits getriebefreie Direktantriebe bekannt. Mit solchen Direktantrieben werden Positioniergenauigkeiten im Nanometerbereich erreicht. Der verfügbare Verfahrweg ist jedoch auf wenige 100 m begrenzt. Hinzu kommt die weitere Problematik, daß ein solcher Direktantrieb beispielsweise nur jeweils ein Objektiv bewegt, welches dann weit über die anderen Objektive herausragt.

Ebenfalls aus der Praxis sind piezoaktiv bewegbare Z-Tische bekannt, Die Verfahrbereiche solcher Z-Tische sind jedoch durch die Piezos eingeschränkt. Piezosysteme sind darüber hinaus durch die erforderlichen externen Meßsysteme und die ebenfalls erforderlichen Hochspannungsansteuerungen teuer.

Mit der Piezoansteuerung sind auch bereits nahezu beliebige Z-Scanraten erreicht worden. Gleichförmig schnelle und auch sehr langsame Z-Scanraten, so z.B. 1000 µm pro Sekunde bis 0,01 µm pro Sekunde.
Geschwindigkeitstoleranzen von weniger als plus/minus 0,5 % sind jedenfalls mit getriebemotorischen Mitteln nur äußerst schwierig zu erreichen.

Soll nun ein Feinverstelltisch in konventionellen Mikroskopen eingesetzt werden, so ist an dessen Bauform die Forderung nach einer extrem flachen Ausführung zu stellen, wobei Höhen von ca. 5 mm erstrebenswert sind. Außerdem ist in dem Tischzentrum ein Durchgang für den Strahldurchtritt vorzusehen.

Weiter aus der Praxis sind auch bereits seit Jahren Z-Tische mit einer galvanometrisch angetriebenen Kipp-Platte bekannt. Der Nachteil einer solchen Anordnung liegt jedoch darin, daß bei größeren Hubbewegungen zwangsweise mit dem Hub eine Lateralbewegung des Objekts stattfindet. Liegt das zu beobachtende Objekt in der Ebene des Drehpunktes der Kipp-Platte, so ist der Fehler, der durch die Lateralbewegung entsteht, vernachlässigbar klein. Bei von der Drehpunktebene weiter entfernten Objekten oder Objektbereichen wird dieser Fehler jedoch sehr schnell mit der Entfernung unerträglich groß.

Der Erfindung liegt nun die Aufgabe zugrunde, einen Feinfokussiertisch für Mikroskope der hier in Rede stehenden Art derart auszugestalten und weiterzubilden, daß auch bei größerer Hubbewegung der Objektplatte kein Fehler entsteht. Des weiteren soll der Feinfokussiertisch einfach aufgebaut und möglichst dünn realisierbar sein.

Der erfindungsgemäße Feinfokussiertisch löst die voranstehende Aufgabe durch die Merkmale des Patentanspruches 1. Danach ist der eingangs genannte Feinfokussiertisch für Mikroskope derart ausgestaltet, daß die Halterung einen Montagebereich, vorzugsweise befestigt auf einem Objekttisch oder am Mikroskop, und einen Verbindungsbereich zur Objektplatte hin umfaßt und daß sich zwischen dem Montagebereich und dem Verbindungsbereich über Biegestellen angelenkte Parallelarme erstrecken.

Erfindungsgemäß ist erkannt worden, daß sich der bei herkömmlichen Z-Tischen einstellende Fehler dann jedenfalls vermeiden läßt, wenn die Objektplatte eine parallele Hubcharakteristik aufweist. Dazu umfaßt die Halterung einen Montagebereich, mit dem die Halterung starr festlegbar ist. Im konkreten dient der Montagebereich zum Befestigen entweder auf einem Objekttisch oder am Mikroskop selbst. Des weiteren umfaßt die Halterung einen Verbindungsbereich zur Objektplatte hin, wodurch die Objektplatte letztendlich mit dem Montagebereich wirkverbunden ist. Zwischen dem Montagebereich und dem Verbindungsbereich erstrecken sich jeweils über Biegestellen angelenkte Parallelarme, wobei die Biegestellen einerseits zwischen dem Montagebereich und den Parallelarmen und andererseits zwischen den Parallelarmen bzw. dem Verbindungsbereich und dem Objekttisch ausgebildet sind.

Durch die hier beanspruchten Merkmale ist jedenfalls sichergestellt, daß sich der Objekttisch bei einer Auslenkung nach unten oder nach oben in seiner horizontalen Ausrichtung nicht verändert, daß nämlich die Objektplatte eine parallele Hubcharakteristik aufweist. Dazu ist von ganz besonderer Bedeutung, daß der Montagebereich der Halterung ortsfest angeordnet wird und daß die Parallelarme eine Verbindung zwischen der horizontal ausgerichteten Objektplatte und dem Montagebereich darstellen, wobei es die Biegestellen ermöglichen, daß sich die Parallelarme in einem der Auslenkung entsprechenden Winkel einerseits zum Montagebereich und andererseits zur Objektplatte biegen lassen. Letztendlich wird der bei herkömmlichen Z-Tischen auftretende Kippfehler der Objektplatte durch die Anlenkung der Objektplatte mittels Parallelarmen und über definierte Biegestellen kompensiert.

Hinsichtlich einer konkreten Ausgestaltung der Objektplatte ist es von Vorteil, wenn diese rechteckig ausgeführt ist und wenn die Objektplatte im Bereich einer ihrer Kanten - nämlich im Bereich der Verbindungskante - über eine Biegestelle und den Verbindungsbereich mit den Parallelarmen verbunden ist. Eine rechteckige Ausgestaltung der Objektplatte bietet sowohl in fertigungstechnischer Hinsicht als auch unter dem Gesichtspunkt eines mäanderförmigen Abscannens von Objekten einen ganz erheblichen Vorteil.

Die der Objektplatte zugeordnete Biegestelle erstreckt sich dabei parallel zu der Verbindungskante der Objektplatte. Letztendlich verläuft diese Biegestelle parallel zu der gegenüberliegenden freien Kante der Objektplatte, wobei diese Biegestelle zur Anlenkung der Objektplatte dient.

Ebenfalls unter fertigungstechnischen Gesichtspunkten ist es von weiterem Vorteil, wenn die Halterung in Form eines die Objektplatte umgebenden Rahmens ausgebildet ist. Entsprechend der Ausgestaltung der Objektplatte kann auch der Rahmen rechteckig ausgeführt sein Dabei könnte die Objektplatte zum umlaufenden Rahmen hin zumindest geringfügig beabstandet sein, wobei die Verbindungskante bzw. der Verbindungsbereich der Objektplatte auf der dem Montagebereich der Halterung gegenüberliegenden Seite der Objektplatte liegt. Jedenfalls ist im Rahmen der hier in Rede stehenden Ausgestaltung die Objektplatte in den Rahmen quasi integriert und läßt sich aus der Ebene des Rahmens herausdrücken, wobei sich dabei die Parallelarme an den Biegestellen abwinkeln lassen.

Die Biegestelle zwischen dem Montagebereich und den Parallelarmen könnte parallel zu der dem Montagebereich zugewandten Kante des Rahmens verlaufen. Dadurch wäre gewährleistet, daß sämtliche Kanten der Objektplatte parallel zu den Kanten der Halterung bzw. des Rahmens verlaufen. Die Biegestellen wären dabei ebenfalls parallel zu Kanten des Rahmens und der Objektplatte ausgerichtet.

In weiter vorteilhafter Weise sind zwei gegenüberliegende Rahmenschenkel über die Biegestellen dem Montagebereich und dem Verbindungsbereich zugeordnet, wobei die beiden anderen einander gegenüberliegenden Rahmenschenkel jeweils zwei Parallelarme umfassen. Letztendlich besteht der Rahmen aus insgesamt vier Rahmenschenkeln, wobei zwei einander gegenüberliegende Rahmenschenkel einerseits dem Montagebereich und andererseits dem Verbindungsbereich zugeordnet sind. Die jeweils anderen, ebenfalls einander gegenüberliegenden Rahmenschenkel bilden die Parallelarme, wobei jeder Parallelarm - auf jeder Seite - doppelt ausgebildet ist und wobei die parallel zueinander mit Abstand angeordneten Parallelarme während der Hubbewegung der Objektplatte sich entsprechend der Auslenkung bzw. entsprechend dem Hub der Objektplatte relativ zueinander verschieben, was wiederum auf die Dicke des Rahmens und die Ausgestaltung der Biegestellen zurückzuführen ist.

Im konkreten könnte die Objektplatte und die Halterung aus zwei aneinanderliegenden, fest miteinander verbundenen identischen Platten hergestellt sein, wobei die Platten durchgehende, drei aneinander angrenzende Kanten der Objektplatte bildende Ausnehmungen bzw. Durchgänge, im Bereich des Rahmens auf der jeweils aufeinander zu gerichteten Seite der Platte eine zur Beabstandung dienende geringere Dicke und im Bereich der Biegestellen ebenfalls auf den jeweils aufeinander zu gerichteten Seiten der Platten Aussparungen bzw. Ausfräsungen aufweisen.

Die geringere Dicke im Rahmenbereich führt zu einer Beabstandung der den jeweiligen Platten zugeordneten Rahmenschenkel zueinander, so daß eine Relativbewegung bzw. Verschiebung zwischen den Teilen der Rahmenschenkel bei einer Hubbewegung der Objektplatte möglich ist. Die Aussparungen bzw. Ausfräsungen im Bereich der Biegestellen definieren die Biegestellen und sind in weiter vorteilhafter Weise derart ausgelegt, daß die verbleibende Materialstärke - jeweils zur Oberfläche der jeweiligen Platte hin - eine Dauerbiegefestigkeit der Platten gewährleisten.

Die voranstehend beschriebene Konstruktion führt jedenfalls dazu, daß die Platten lediglich im Bereich der Objektplatte und im Montagebereich fest miteinander verbunden sind und daß einerseits die reduzierte Dicke im Rahmenbereich und andererseits die Aussparungen bzw. Ausfräsungen im Bereich der Biegestellen zu einer Beabstandung der Platten zueinander führen. Bei Auslenkung der Objektplatte oder des dem Montagebereich abgewandten bzw. gegenüberliegenden Rahmenbereichs oder Verbindungsbereichs ist somit ein Parallelhub der Objektplatte möglich.

Gemäß der voranstehenden konkreten Ausgestaltung ist es möglich, daß die Halterung und die Objektplatte die gleiche Dicke aufweisen, wodurch sich eine flache Ausgestaltung des Feinfokussiertischs realisieren läßt. Die Dicke von Halterung und Objektplatte kann ohne weiteres im Bereich unter 5 mm bis etwa 10 mm liegen

Des weiteren ist es möglich, bspw. für den Einsatz an einem Objekttisch bei der Durchlichtmikroskopie oder für den Einsatz unmittelbar am Objektiv, die Objektplatte mit einem in etwa mittigen Durchgang für den Strahldurchtritt auszustatten. Die Dimensionierung dieses Durchgangs orientiert sich an den jeweiligen Erfordernissen.

Die Objektplatte und die Halterung läßt sich bspw. aus Edelstahl oder Aluminium fertigen. In beiden Fällen ist eine einfache spanende Bearbeitung möglich. Ebenso wäre es denkbar, die einzelnen Teile des Feinfokussiertischs - die beiden den Feinfokussiertisch bildenden Platten - spritzgußtechnisch herzustellen, wobei dort die Ausnehmungen und Aussparungen bereits vorgesehen sein könnten. Ansonsten ist eine spanende Bearbeitung sowie das anschließende Zusammenbringen der einzelnen Platten erforderlich.

Hinsichtlich der eingangs bereits genannten Verstelleinrichtung wäre es im Lichte einer besonders einfachen Ausgestaltung von Vorteil, wenn die Verstelleinrichtung unmittelbar an der Objektplatte, vorzugsweise auf der dem Verbindungsbereich gegenüberliegenden freien Seite, angreift. Letztendlich könnte man hier die Objektplatte nach oben oder nach unten ziehen oder drücken, wodurch sich ein Parallelhub der Objektplatte realisieren läßt. Ebenso wäre es denkbar, die Verstelleinrichtung an dem dem Verbindungsbereich zugeordneten Rahmenschenkel angreifen zu lassen, wodurch sich bei einer entsprechenden Beaufschlagung nach oben oder nach unten ebenfalls ein Parallelhub der Objektplatte ergibt.

Als Antrieb für die Verstelleinrichtung lassen sich herkommliche Mittel verwenden, wobei in vorteilhafter Weise ein zwei- oder mehrstufiger Antrieb für die Grob- und Feinbewegung der Objektplatte vorgesehen sein kann. Zur ganz besonders genauen und reproduzierbaren Einstellung der Fokuslage eines Objekts könnte ein Galvanometerantneb und ein zwischen der Objektplatte bzw. dem Rahmen und dem Galvanometerantrieb wirkendes Seil vorgesehen sein. Die Objektplatte und/oder der Rahmen lassen sich entsprechend der Anordnung des Galvanometerantriebs ohne weiteres nach oben oder nach unten ziehen bzw. verlagern, um den Parallelhub der Objektplatte realisieren zu können.

Im Hinblick auf mögliche Verwendungen des Feinfokussiertischs sei an dieser Stelle ganz besonders darauf hingewiesen, daß der Feinfokussiertisch als Zwischenstück zwischen Mikroskop und Objektiv bzw Objektivrevolver eingebaut werden kann. Ebenso ist es möglich, den zuvor erörterten Feinfokussiertisch mit seiner Halterung auf dem Objekttisch eines Mikroskops zu befestigen, wodurch sich die Fokuslage des Objekts feinst einstellen läßt. Jedenfalls kann der erfindungsgemäße Feinfokussiertisch zur schnellen und präzisen Einstellung der Fokuslage in der Konfokalmikroskopie dienen, was letztendlich dem konkreten Bedarf in der Konfokalmikroskopie entspricht.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erlautert. In der Zeichnung zeigt
- Fig. 1: in einer schematischen Seitenansicht, geschnitten entlang der Linie I-I aus Fig. 2, ein Ausführungsbeispiel eines erfindungsgemäßen Feinfokussiertischs und
- Fig. 2: den Gegenstand aus Fig. 1 in einer Draufsicht, wobei zwei alternative Verstelieinrichtungen angedeutet sind.

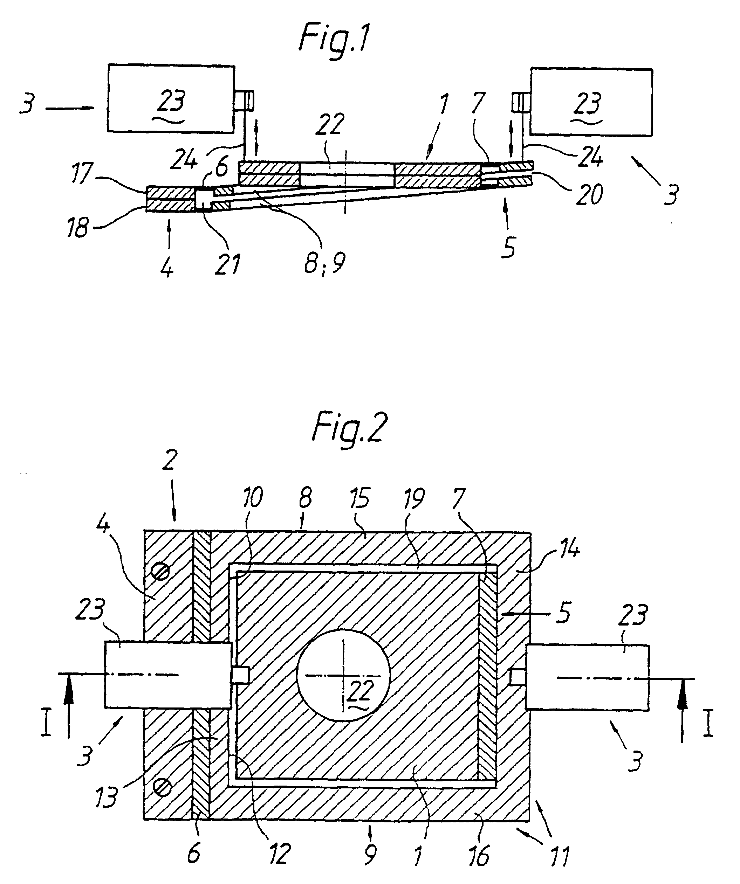

Die Fig. 1 und 2 zeigen gemeinsam ein Ausführungsbeispiel eines Feinfokussiertischs für Mikroskope, wobei der Einfachheit halber hier lediglich der Feinfokussiertisch dargestellt ist Der Feinfokussiertisch umfaßt eine Objektplatte 1, eine Halterung 2 für die Objektplatte 1 und eine die Objektplatte 1 in ihrer horizontalen Lage verändernde Verstelleinrichtung 3.

Erfindungsgemäß umfaßt die Halterung 2 einen Montagebereich 4, der vorzugsweise zum Befestigen auf einem hier nicht gezeigten Objekttisch oder am Mikroskop - zwischen Objektiv und Mikroskop - dient. Des weiteren umfaßt die Halterung 2 einen Verbindungsbereich 5 zur Objektplatte 1 hin, wobei sich zwischen dem Montagebereich 4 und dem Verbindungsbereich 5 über Biegestellen 6, 7 angelenkte Parallelarme 8, 9 erstrecken.

Fig. 2 zeigt besonders deutlich, daß die Objektplatte 1 rechteckig ausgeführt ist und im Bereich ihrer Verbindungskante 10 über die Biegestelle 7 und den Verbindungsbereich 5 mit den Parallelarmen 8, 9 verbunden ist. Die Biegestelle 7 erstreckt sich dabei parallel zu der Verbindungskante 10 der Objektplatte 1.

Fig. 2 läßt des weiteren erkennen, daß die Halterung 2 in Form eines die Objektplatte 1 umgebenden Rahmens 11 ausgebildet ist. Auch der Rahmen 11 ist dabei rechteckig ausgeführt. Die Objektplatte 1 ist zum umlaufenden Rahmen 11 hin geringfügig beabstandet, wobei die Verbindungskante 10 bzw. der Verbindungsbereich 5 auf der dem Montagebereich 4 gegenüberliegenden Seite der Objektplatte 1 liegt. Des weiteren verläuft die Biegestelle 6 zwischen dem Montagebereich 4 und den Parallelarmen 8, 9 parallel zu der dem Montagebereich 4 zugewandten Kante 12 des Rahmens 11, wobei die Kante 12 letztendlich der Verbindungskante 10 entspricht.

Der in den Fig. 1 und 2 gezeigte Feinfokussiertisch ist des weiteren derart ausgestaltet, daß zwei gegenüberliegende Rahmenschenkel 13, 14 über die Biegestellen 6, 7 dem Montagebereich 4 und dem Verbindungsbereich 5 zugeordnet sind und daß die beiden anderen einander gegenüberliegenden Rahmenschenkel 15, 16 jeweils einen Parallelarm 8, 9 umfassen.

Im konkreten besteht die Objektplatte 1 und die Halterung 2 aus zwei aneinanderliegenden, partiell fest miteinander verbundenen identischen Platten 17, 18, was sich ganz besonders gut der Fig. 1 entnehmen läßt. Diese Platten 17, 18 weisen durchgehende, drei Kanten der Objektplatte 1 bildende Ausnehmungen 19 auf. Des weiteren ist in den Platten 17, 18 im Bereich des Rahmens 11 auf der jeweils aufeinander zu gerichteten Seite der Platten 17, 18 eine zur Beabstandung dienende geringere Dicke vorgesehen, so daß dort zwischen den Rahmenschenkeln 13, 14, 15 und 16 ein Abstand 20 besteht. Im Bereich der Biegestellen 6, 7 sind ebenfalls auf den jeweils aufeinander zu genchteten Seiten Platten der 17, 18 Aussparungen 21 vorgesehen, die letztendlich die Biegestellen 6, 7 bei einer geringst möglich verbleibenden Wandstarke zur Realisierung der Biegung definieren.

Fig. 1 läßt des weiteren erkennen, daß die Halterung 2 und die Objektplatte 1 die gleiche Dicke aufweisen, wobei hier insgesamt eine Dicke von etwa 6 mm vorgesehen ist.

Gemäß der Darstellung in Fig. 2 weist die Objektplatte 1 einen etwa mittigen Durchgang 22 für den Strahldurchtritt auf.

Bei dem hier gewählten Ausführungsbeispiel sind in Fig. 2 zwei alternative Anordnungen der Verstelleinrichtung 3 dargestellt, wobei gemäß der Darstellung in Fig. 1 die Verstelleinrichtung 3 unmittelbar an der Objektplatte 1 angreift, nämlich auf der dem Verbindungsbereich 5 gegenüberliegenden Seite. Gemäß der Darstellung in Fig. 2 greift die Verstelleinrichtung 3 entweder unmittelbar an der Objektplatte 1 oder an dem dem Verbindungsbereich 5 zugeordneten Rahmenschenkel 14 an. Ungeachtet der konkreten Anordnung handelt es sich bei der Verstelleinrichtung 3 um einen Galvanometerantrieb 23 und ein zwischen der Objektplatte 1 bzw. dem Rahmen 11 und dem Galvanometerantrieb 23 wirkendes Seil 24.

Hinsichtlich der konkreten Verwendungsmöglichkeiten des erfindungsgemäßen Feinfokussiertischs wird zur Vermeidung von Wiederholungen auf den allgemeinen Teil der Beschreibung verwiesen.

### Bezugszeichenliste

- 1: Objektplatte
- 2: Halterung fur die Objektplatte
- 3: Verstelleinrichtung
- 4: Montagebereich
- 5: Verbindungsbereich
- 6: Biegestelle
- 7: Biegestelle
- 8: Parallelarm
- 9: Parallelarm
- 10: Verbindungskante
- 11: Rahmen
- 12: Kante des Rahmens
- 13: Rahmenschenkel
- 14: Rahmenschenkel
- 15: Rahmenschenkel
- 16: Rahmenschenkel
- 17: Platte
- 18: Platte
- 19: Ausnehmung
- 20: Abstand
- 21: Aussparung
- 22: Durchgang
- 23: Galvanometerantrieb
- 24: Seil

## Patentansprüche

1. Feinfokussiertisch für Mikroskope, mit einer Objektplatte (1), einer Halterung (2) für die Objektplatte (1) und einer die Objektplatte (1) in vertikaler Richtung (z-Richtung) verändernden Verstelleinrichtung (3), wobei die Halterung (2) einen Montagebereich (4) zum Befestigen auf einem Objekttisch oder am Mikroskop, und einen Verbindungsbereich (5) zur Objektplatte (1) hin umfaßt, **dadurch gekennzeichnet, daß** sich zwischen dem Montagebereich (4) und dem Verbindungsbereich (5) über Biegestellen (6, 7) angelenkte Parallelarme (8, 9) erstrecken und daß die Biegestellen (6, 7) parallel zu der Verbindungskante (10) der Objektplatte (1) verlaufen.

2. Feinfokussiertisch nach Anspruch 1, **dadurch gekennzeichnet, daß** die Objektplatte (1) rechteckig ausgeführt ist und im Bereich einer ihrer Kanten - der Verbindungskante (10) - über die Biegestellen (6, 7) und den Verbindungsbereich (5) mit den Parallelarmen (8, 9) verbunden ist.

3. Feinfokussiertisch nach Anspruch 1 oder 2, **dadurch gekennzeichnet, daß** die Halterung (2) in Form eines die Objektplatte (1) umgebenden Rahmens (11) ausgebildet ist.

4. Feinfokussiertisch nach Anspruch 3, **dadurch gekennzeichnet, daß** der Rahmen (11) rechteckig ausgeführt ist.

5. Feinfokussiertisch nach Anspruch 3 oder 4, **dadurch gekennzeichnet, daß** die Objektplatte (1) zum umlaufenden Rahmen (11) hin zumindest geringfügig beabstandet ist und daß die Verbindungskante (10) bzw. der Verbindungsbereich (5) auf der dem Montagebereich (4) gegenüberliegenden Seite der Objektplatte (1) liegt.

6. Feinfokussiertisch nach einem der Ansprüche 1 bis 5, **dadurch gekennzeichnet, daß** die Biegestellen (6, 7) zwischen dem Montagebereich (4) und den Parallelarmen (8, 9) parallel zu der dem Montagebereich (4) zugewandten Kante (12) des Rahmens (11) verläuft.

7. Feinfokussiertisch nach einem der Ansprüche 4 bis 6, **dadurch gekennzeichnet, daß** zwei gegenüberliegende Rahmenschenkel (13, 14) über die Biegestellen (6, 7) dem Montagebereich (4) und dem Verbindungsbereich (5) zugeordnet sind und die beiden anderen einander gegenüberliegenden Rahmenschenkel (15, 16) jeweils einen Parallelarm (8, 9) umfassen.

8. Feinfokussiertisch nach einem der Ansprüche 1 bis 7, **dadurch gekennzeichnet, daß** die Objektplatte (1) und die Halterung (2) aus zwei aneinanderliegenden, partiell fest miteinander verbundenen, identischen Platten (17, 18) besteht, wobei die Platten (17, 18) durchgehende, drei Kanten der Objektplatte (1) bildende Ausnehmungen (19), im Bereich des Rahmens (11) auf der jeweils aufeinanderzu gerichteten Seite der Platten (17, 18) eine zur Beabstandung dienende geringere Dicke und im Bereich der Biegestellen (6, 7) ebenfalls auf den jeweils aufeinanderzu gerichteten Seiten der Platten (17, 18) Aussparungen (21) bzw. Ausfräsungen aufweisen.

9. Feinfokussiertisch nach einem der Ansprüche 1 bis 8, **dadurch gekennzeichnet, daß** die Halterung (2) und die Objektplatte (1) die gleiche Dicke aufweisen.

10. Feinfokussiertisch nach Anspruch 9, **dadurch gekennzeichnet, daß** die Dicke von Halterung (2) und Objektplatte (1) im Bereich zwischen 5 mm und 10 mm liegt

11. Feinfokussiertisch nach einem der Ansprüche 1 bis 10, **dadurch gekennzeichnet, daß** die Objektplatte (1) einen in etwa mittigen Durchgang (22) für den Strahldurchtritt aufweist.

12. Feinfokussiertisch nach einem der Ansprüche 1 bis 11, **dadurch gekennzeichnet, daß** die Objektplatte (1) und die Halterung (2) aus Edelstahl oder Aluminium gefertigt sind.

13. Feinfokussiertisch nach einem der Ansprüche 1 bis 12, **dadurch gekennzeichnet, daß** die Verstelleinrichtung (3) unmittelbar an der Objektplatte (1), vorzugsweise auf der dem Verbindungsbereich (5) gegenüberliegenden Seite, angreift.

14. Feinfokussiertisch nach einem der Ansprüche 1 bis 12, **dadurch gekennzeichnet, daß** die Verstelleinrichtung (3) an dem dem Verbindungsbereich (5) zugeordneten Rahmenschenkel (14) angreift.

15. Feinfokussiertisch nach einem der Ansprüche 1 bis 14, **dadurch gekennzeichnet, daß** die Verstelleinrichtung (3) einen zwei- oder mehrstufigen Antrieb für die Grob- und Feinbewegung der Objektplatte (1) umfaßt.

16. Feinfokussiertisch nach einem der Ansprüche 1 bis 15, **dadurch gekennzeichnet, daß** die Verstelleinrichtung (3) einen Galvanometerantrieb (23) und ein zwischen der Objektplatte (1) bzw. dem Rahmen (11) und dem Galvanometerantrieb (23) wirkendes Seil (24) umfaßt.

17. Verwendung des Feinfokussiertischs nach einem der Ansprüche 1 bis 16 als Feinfokussiereinrichtung, wobei der Feinfokussiertisch als Zwischenstück zwischen Mikroskop und Objektiv bzw. Objektivrevolver eingebaut ist.

18. Verwendung des Feinfokussiertischs nach einem der Ansprüche 1 bis 16 als Feinfokussiereinrichtung, wobei der Feinfokussiertisch mit seiner Halterung (2) auf dern Objekttisch eines Mikroskops befestigt ist.

19. Verwendung des Feinfokussiertischs nach einem der Ansprüche 1 bis 16 zur schnellen und präzisen Einstellung der Fokuslage in der Konfokalmikroskopie.

## Claims

1. A fine-focusing stage for microscopes comprising: an object carrier (1), a holder (2) for the object carrier (1) and a positioning means (3) for changing the object carrier (1) in the vertical direction (z-direction), wherein the holder (2) has a mounting portion (4) for attaching to the stage or the microscope, and connection portion (5) to the object carrier (1), **characterized in that**, between the mounting portion (4) and the connection portion (5) parallel arms (8, 9) are attached via bending elements (6, 7) and the bending elements (6, 7) run parallel to the connecting edge (10) of the object carrier (1).

2. The fine-focusing stage according to claim 1, wherein the object carrier (1) is in the shape of a rectangle and being connected in near one of its edges - connecting portion (5) - via the bending elements (6, 7) and the connection portion (5) with the parallel arms (8, 9).

3. The fine-focusing stage according to claim 1 or 2, wherein the holder (2) is configured in the form of a frame (11) surrounding the.

4. The fine-focusing stage according to claim 3, wherein the frame (11) is in the shape of a rectangle.

5. The fine-focusing stage according to claim 3 or 4, wherein the object carrier (1) is slightly spaced apart from the surrounding frame (11) and the connecting edge (10) or the connecting portion (5) are positioned opposite to the mounting portion (4).

6. The fine-focusing stage according to one of the claims 1 to 5, wherein the bending elements (6, 7) between the mounting portion (4) and the parallel arms (8, 9) run parallel to the edge of the frame which is adjacent the mounting portion (4).

7. The fine-focusing stage according to one of the claims 4 to 7, wherein two frame legs (13, 14) are attached via bending elements (6, 7) to the mounting portion (4) and said connecting portion (5) and the two other opposite frame legs (15, 16) include two parallel arms (8, 9).

8. The fine-focusing stage according to one of the claims 1 to 7, wherein the object carrier (1) and said holder (2) are made of two superimposed and partially fixed together identical plates (17, 18) and whereby the plates (17, 18) comprise cut-out spaces (19) through said plates (17, 18) along three adjacent edges of the object carrier (1) and in the vicinity of said frame (11) on facing sides of said plates (17, 18) and in the vicinity of the bending elements (6, 7) a reduced thickness is provided to separate said object carrier (1) and said plates (17, 18) having on facing sides recesses (21) or cut -outs.

9. The fine-focusing stage according to one of the claims 1 to 8, wherein said holder (2) and the object carrier (1) have the same thickness.

10. The fine-focusing stage according to claim 10, wherein said thickness of the holder (2) and the object carrier (1)are in a range from 5 mm to 10 mm.

11. The fine-focusing stage according to one of the claims I to 10, wherein said object carrier (1) includes a centrally located passage (22) there through for transmitting light.

12. The fine-focusing stage according to one of the claims 1 to 11, wherein said object carrier (1) the holder (2) are made from stainless steel or aluminium.

13. The fine-focusing stage according to one of the claims 1 to 12, wherein the positioning means (3) is directly attached to the object carrier (1), preferably to the connecting portion (5) on the opposite side.

14. The fine-focusing stage according to one of the claims 1 to 12, wherein the positioning means (3) is attached to connecting portion (5) allocated to the frame leg (14).

15. The fine-focusing stage according to one of the claims 1 to 14, wherein positioning means (3) comprises a two- or more - stage drive for coarse and fine movement of the object carrier (1).

16. The fine-focusing stage according to one of the claims 1 to 15, wherein positioning means (3) comprise a galvanometer drive (23) and a cord (24) acting between the object carrier (1) or the frame (11) and the galvanometer drive (23).

17. The fine-focusing stage according to one of the claims 1 to 16 used as a fine-focusing device wherein the fine-focusing stage is positioned between a microscope and an objective lens or an objective nosepiece.

18. The fine-focusing stage according to one of the claims 1 to 16 used as a fine-focusing device wherein the fine-focusing stage is mounted with the holder (2) on the object stage of a microscope.

19. The fine-focusing stage according to one of the claims I to 16 used for fast and precise adjustment of the focal position in confocal microscopy.

## Revendications

1. Surplatine de mise au point fine pour microscope, comportant un porte-objet (1), un support (2) du porte-objet (1) et un dispositif de réglage (3) faisant varier la position verticale (en z) du porte-objet (1), le support (2) comportant une zone de montage (4) servant à la fixation sur une platine ou au microscope et une zone de liaison (5) au porte-objet (1),
**caractérisée en ce qu'entre** la zone de montage (4) et la zone de liaison (5), s'étendent des bras parallèles (8, 9) articulés par l'intermédiaire de plages de flexion (6, 7) et que les plages de flexion (6, 7) sont parallèles à l'arête de liaison (10) du porte-objet (1).

2. Surplatine de mise au point fine suivant la revendication 1,
**caractérisée en ce que** le porte-objet (1) est de forme rectangulaire et est relié au niveau de l'une de ses arêtes - l'arête de liaison (10) - par les plages de flexion (6, 7) et la zone de liaison (5) aux bras parallèles (8, 9).

3. Surplatine de mise au point fine suivant la revendication 1 ou 2,
**caractérisée en ce que** le support (2) a la forme d'un cadre (11) entourant le porte-objet (1).

4. Surplatine de mise au point fine suivant la revendication 3,
**caractérisée en ce que** le cadre (11) est de forme rectangulaire.

5. Surplatine de mise au point fine suivant la revendication 3 ou 4,
**caractérisée en ce que** le porte-objet est écarté, tout au moins légèrement, du cadre (11) qui l'entoure et que l'arête de liaison (10) ou la zone de liaison (5) se situe du côté du porte-objet (1) opposé à la zone de montage (4).

6. Surplatine de mise au point fine suivant l'une des revendications 1 à 5,
**caractérisée en ce que** les plages de flexion (6, 7) situées entre la zone de montage (4) et les bras parallèles (8, 9) sont parallèles à l'arête (12) du cadre (11) jouxtant la zone de montage (4).

7. Surplatine de mise au point fine suivant l'une des revendications 4 à 6,
**caractérisée en ce que** deux côtés opposés (13, 14) du cadre (11) sont associés par l'intermédiaire des plages de flexion (6, 7) à la zone de montage (4) et à la zone de liaison (5) et que les deux autres côtés opposés (15, 16) du cadre (11) comportent chacun un bras parallèle (8, 9).

8. Surplatine de mise au point fine suivant l'une des revendications 1 à 7,
**caractérisée en ce que** le porte-objet (1) et le support (2) sont constitués de deux plaques identiques jointives (17, 18), en partie solidement reliées l'une à l'autre, les plaques (17, 18) présentant des évidements débouchants (19) formant trois arêtes du porte-objet (1), ainsi que, au niveau du cadre (11), sur les faces en regard des plaques (17, 18), une dépouille d'épaisseur servant à l'écartement et, au niveau des plages de flexion (6, 7), également sur les faces en regard des plaques (17, 18), des échancrures (21) ou fraisures.

9. Surplatine de mise au point fine suivant l'une des revendications 1 à 8,
**caractérisée en ce que** le support (2) et le porte-objet (1) présentent la même épaisseur.

10. Surplatine de mise au point fine suivant la revendication 9,
**caractérisée en ce que** l'épaisseur du support (2) et du porte-objet (1) est comprise entre 5 mm et 10 mm.

11. Surplatine de mise au point fine suivant l'une des revendications 1 à 10,
**caractérisée en ce que** le porte-objet (1) présente une traversée (22) approximativement centrale pour le passage des rayons.

12. Surplatine de mise au point fine suivant l'une des revendications 1 à 11,
**caractérisée en ce que** le porte-objet (1) et le support (2) sont fabriqués en acier inoxydable ou en aluminium.

13. Surplatine de mise au point fine suivant l'une des revendications 1 à 12,
**caractérisée en ce que** le dispositif de réglage (3) est en prise directe avec le porte-objet (1), de préférence sur le côté opposé à la zone de liaison (5).

14. Surplatine de mise au point fine suivant l'une des revendications 1 à 12,
**caractérisée en ce que** le dispositif de réglage (3) est en prise avec le côté (14) du cadre (11) associé à la zone de liaison (5).

15. Surplatine de mise au point fine suivant l'une des revendications 1 à 14,
**caractérisée en ce que** le dispositif de réglage (3) comprend une commande à deux ou plusieurs étages pour les mouvements grossier et fin du porte-objet (1).

16. Surplatine de mise au point fine suivant l'une des revendications 1 à 15,
**caractérisée en ce que** le dispositif de réglage (3) comprend une commande galvanométrique (23) et un câble (24) agissant entre le porte-objet (1) ou le cadre (11) et la commande galvanométrique (23).

17. Utilisation de la surplatine de mise au point fine suivant l'une des revendications 1 à 16 comme dispositif de mise au point fine, la surplatine étant montée en entretoise entre le microscope et l'objectif ou la tourelle porte-objectifs.

18. Utilisation de la surplatine de mise au point fine suivant l'une des revendications 1 à 16 comme dispositif de mise au point fine, la surplatine étant fixée avec son support (2) sur la platine d'un microscope.

19. Utilisation de la surplatine de mise au point fine suivant l'une des revendications 1 à 16 pour la mise au point rapide et précise en microscopie confocale.
